# EUROPÄISCHE PATENTSCHRIFT

(11) **EP 4 504 368 B1**
(45) Veröffentlichungstag und Bekanntmachung des Hinweises auf die Patenterteilung: **06.05.2026**
(21) Anmeldenummer: 23710894.9
(22) Anmeldetag: 13.03.2023
(51) Int. Cl.: B01D 29/11, B01D 36/00, B01D 37/02

(54) **RINGFILTERELEMENT**
RING FILTER ELEMENT
ÉLÉMENT FILTRANT ANNULAIRE

(30) Priorität: 07.04.2022 DE 102022203518
(43) Veröffentlichungstag der Anmeldung: 12.02.2025
(73) Patentinhaber: MAHLE International GmbH, 70376 Stuttgart (DE)
(72) Erfinder: HRODEK, Jörg, 9130 Poggersdorf (AT); KOPPI, Peter, 9412 Sankt Margarethen (AT)
(86) Internationale Anmeldenummer: PCT/EP2023/056326
(87) Internationale Veröffentlichungsnummer: WO 2023/194039

(56) Entgegenhaltungen:
- DE-A1- 102009 047 827
- DE-A1- 102019 122 032
- DE-A1- 102019 122 034
- DE-U1- 202008 016 281
- US-A- 2 796 989

## Beschreibung

Die vorliegende Erfindung betrifft eine Filtereinrichtung mit einem Ringfilterelement sowie eine Batteriekühleinrichtung mit einer solchen Filtereinrichtung.

Aus der DE 10 2019 122 034 A1, der US 2 796 989 A, der DE 10 2009 047 827 A1, der DE 10 2019 122 032 A1 und der DE 20 2008 016 281 U1 sind jeweils ein Ringfilterelement mit einer oberen Endscheibe und einer unteren Endscheibe sowie mit einem zwischen der oberen Endscheibe und der unteren Endscheibe angeordneten Filtermaterial bekannt.

Um insbesondere Elektrofahrzeuge effizient betreiben zu können, werden deren Energiespeicher üblicherweise gekühlt, was entweder durch eine indirekte oder direkte Kühlung erfolgen kann. Bei einer direkten Kühlung kommt ein Kühlmedium in direkten Kontakt mit den zu kühlenden Komponenten, beispielsweise Energiespeicherzellen, wodurch es erforderlich ist, dass das Kühlmedium dielektrisch, das heißt elektrisch nichtleitend ist, da es ansonsten zu unerwünschten Kurzschlüssen kommen kann. Um die dielektrischen Eigenschaften des Kühlmediums aufrechterhalten zu können, ist auch ein Wassergehalt des Kühlmediums zu überwachen und unterhalb einem vordefinierten Grenzwert zu halten. Wasser kann dabei selbst in eigentlich geschlossenen Systemen durch Undichtigkeiten bzw. Kondensationseffekte entstehen.

Die vorliegende Erfindung beschäftigt sich mit dem Problem, für eine Ringfiltereinrichtung eine verbesserte oder zumindest eine alternative Ausführungsform anzugeben, mit welcher insbesondere ein Wassergehalt in einem die Ringfiltereinrichtung durchströmenden Fluid gering gehalten werden kann.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Filtereinrichtung, insbesondere ein Ölfilter für eine Batteriekühleinrichtung, mit einem Filtergehäuse, einem darin angeordneten Ringfilterelement und einer Trocknungseinrichtung auszustatten. Dabei stehen zwei Alternativen zur Auswahl: Bei der ersten Alternative wird ein herkömmliches Ringfilterelement (ohne Trocknungseinrichtung und ohne Trocknungsmittel) im Filtergehäuse eingebaut, wobei im Bereich des Filtergehäuses eine Trocknungseinrichtung mit einem Trocknungsmittel angeordnet wird. Bei der zweiten Alternative wird ein Ringfilterelement, welches in bekannter Weise eine obere Endscheibe, eine untere Endscheibe sowie ein zwischen der oberen und unteren Endscheibe angeordnetes Filtermaterial aufweist, mit einer Trocknungseinrichtung mit einem Trocknungsmittel versehen, über welche ein Wassergehalt reduziert bzw. unterhalb eines vordefinierten Grenzwertes gehalten werden kann. Das Filtergehäuse weist eine im Bereich des Filtergehäuses angeordnete Trocknungseinrichtung mit einem Trocknungsmittel auf. Hierdurch ist es möglich, beispielsweise dielektrische Fluide, wie sie im Bereich einer Batteriekühleinrichtung zum Einsatz kommen, zuverlässig zu trocknen und dadurch wasserbedingte Kurzschlüsse zuverlässig zu vermeiden. Weiter ist es hierdurch möglich, die Trocknungseinrichtung entweder in einem strömungsberuhigten Bereich, beispielsweise an der unteren Endscheibe, der oberen Endscheibe oder im Filtergehäuse, oder in einem Hauptströmungspfad, beispielsweise im Bereich des Filtermaterials, anzuordnen und dadurch unterschiedliche aber dennoch bauraumoptimierte Lösungen aufzufinden. Dabei ist generell denkbar, dass die Trocknungseinrichtung nicht zwangsweise direkt in einem Hauptströmungspfad positioniert werden muss, da üblicherweise in dielektrischen Fluiden keine abrupten Wassergehaltsanstiege zu erwarten sind, sondern die Anreicherung ein stetiger langsamer Prozess ist. Hierdurch ist es ausreichend, sofern die Trocknungseinrichtung zusammen mit dem Trocknungsmittel in einem nur schwach umströmten Bereich angebracht ist. Ein derartiger schwach um- bzw. durchströmender Bereich kann beispielsweise im Bereich eines Filtergehäusedeckels des Filtergehäuses sein.

Zudem weist das Filtergehäuse erfindungsgemäß einen Filtergehäusetopf und einen damit, insbesondere verschraubbaren, Filtergehäusedeckel auf, wobei die Trocknungseinrichtung mit dem Trocknungsmittel zumindest in einem Teil des Filtergehäusedeckels angeordnet ist. Weiter ist erfindungsgemäß vorgesehen, dass das Trocknungsmittel als, insbesondere gesinterter, Pressling ausgebildet ist, dessen Form zumindest teilweise komplementär zu einer Innenkontur des Filtergehäusedeckels ausgebildet und mit diesem verbunden ist. Hierdurch ist eine zumindest bereichsweise flächige Anlage der Trocknungseinrichtung an die Innenkontur des Filtergehäusedeckels denkbar, wodurch eine Anordnung der Trocknungseinrichtung in einem eher strömungsberuhigten Bereich erfolgt. Dies bietet den Vorteil, dass durch die Anordnung in dem eher strömungsberuhigten Bereich ein Druckverlust durch die Trocknungseinrichtung mit dem Trocknungsmittel innerhalb der Filtereinrichtung nicht oder nur marginal zu befürchten ist.

Bei einer nicht erfindungsgemäßen Filtereinrichtung ist im Bereich des Filtergehäusedeckels eine fluiddurchlässige Trennwand, beispielsweise ein Gitter, vorgesehen, die zusammen mit dem Filtergehäusedeckel einen Raum begrenzt, in welchem die Trocknungseinrichtung mit einem als Schüttgut ausgebildeten Trocknungsmittel angeordnet ist. Dabei ist selbstverständlich denkbar, dass das Trocknungsmittel schüttgutfähige Zeolithkügelchen aufweist und die fluiddurchlässige Trennwand in der Art eines Gitterkäfigs ausgebildet ist. Die Trennwand kann somit zusammen mit dem Filtergehäusedeckel den Raum zur Aufnahme des Trocknungsmittels begrenzen, wobei auch denkbar ist, dass sich die Trennwand in der Art eines Gitterkäfigs um das Trocknungsmittel, beispielsweise die Zeolithkügelchen, vollständig herumerstreckt.

Bei einer weiteren vorteilhaften Ausführungsform der erfindungsgemäßen Filtereinrichtung ist die Trocknungseinrichtung mit dem Trocknungsmittel als ein das Filterelement umgebender Zylinder, insbesondere als gesinterter Zeolithzylinder oder als gesinterter Pressling, ausgebildet. In diesem Fall kann ein derartiger Zeolithzylinder bzw. ein gepresster und gesinterter Trocknungsmittelzylinder am Filtergehäuse bzw. Filtergehäusetopf befestigt werden, wobei zusätzlich oder alternativ ein derartiger Zylinder selbstverständlich auch an einer Außenkontur des Ringfilterelements und/oder an einer Innenkontur des Ringfilterelements, je nach dem welcher Trocknungseffekt erzielbar sein soll, angeordnet werden kann.

Das entsprechend der zweiten Alternative eingesetzte Ringfilterelement kann insbesondere in einer Filtereinrichtung für eine Batteriekühlung mit einer direkten Kühlung, das heißt einem direkten Kontakt zwischen Energiespeicherzellen, beispielsweise einer Fahrzeugbatterie, und einem Kühlmedium eingesetzt werden. Über die entsprechend der zweiten Alternative erfindungsgemäße Anordnung der Trocknungseinrichtung direkt am Ringfilterelement kann die Trocknungseinrichtung bei beispielsweise einem turnusmäßigen Austausch des Ringfilterelements mit ausgetauscht werden. Dabei ist selbstverständlich klar, dass der Einsatz einer derartigen Trocknungseinrichtung nicht nur auf ein Ringfilterelement an sich beschränkt ist, sondern generell auch an einem Plattenfilter oder ähnlichen Filtern einsetzbar ist.

Bei einer vorteilhaften Weiterbildung der zweiten Alternative desRingfilterelements ist die Trocknungseinrichtung an der oberen Endscheibe und/oder an der unteren Endscheibe angeordnet. Je nach gewünschtem Trocknungseffekt ist somit denkbar, die Trocknungseinrichtung entweder alternativ an der oberen oder unteren Endscheibe anzuordnen, oder bei höherem gewünschten Trocknungseffekt an beiden Endscheiben. Sowohl an der oberen Endscheibe als auch an der unteren Endscheibe steht dabei eine vergleichsweise große freie Fläche zur Verfügung, die zudem von dem durch das Ringfilterelement strömenden Flüssigkeit beispielsweise Öl, durchströmt ist und dadurch seine Trocknungswirkung entfalten kann. Durch die Anordnung der Trocknungseinrichtung an der oberen und/oder unteren Endscheibe kann die Trocknungseinrichtung darüber hinaus in einem strömungsberuhigten Bereich angeordnet werden, wodurch ein durch die Trocknungseinrichtung verursachter Druckabfall reduziert werden kann.

Zweckmäßig ist die Trocknungseinrichtung mit dem Trocknungsmittel als Ringelement ausgebildet. Ein derartiges Ringelement kann beispielsweise ein gesintertes Molekularsieb aus Zeolith sein und dadurch einen festen Körper darstellen, der zur Verbindung mit der oberen und/oder unteren Endscheibe mit dieser verbunden, beispielsweise verklebt, wird. Selbstverständlich sind auch andere Verbindungsarten, wie beispielsweise eine Schraubverbindung oder eine Clipsverbindung denkbar, wobei insbesondere eine lösbare Verbindung zusätzlich die Möglichkeit schafft, die Trocknungseinrichtung von dem Ringfilterelement zu lösen und dadurch separat zu diesem auszutauschen.

Zusätzlich oder alternativ kann auch vorgesehen sein, dass die Trocknungseinrichtung mit dem Trocknungsmittel an dem Filtermaterial des Ringfilterelements angeordnet ist. Hierdurch ist eine Anordnung der Trocknungseinrichtung im Hauptströmungspfad des Ringfilterelements denkbar, wodurch ein besonders hoher Trocknungseffekt erzielbar ist. Hierbei kann die Trocknungseinrichtung beispielsweise als radial innerhalb des Ringfilterelements angeordneter Trocknungsmittelzylinder ausgebildet sein, der wiederum als gesintertes Molekularsieb aus Zeolith hergestellt werden kann. Das Molekularsieb in Kügelchenform kann auch bei gesinterten Molekularsieben bspw. mittels einer Gitterkonstruktion fixiert werden. Hierdurch wäre ein fester eigenständiger Trocknungsmittelzylinder verfügbar, welcher in einen Innenraum des Ringfilterelements eingeschoben und dort fixiert werden kann. Rein theoretisch ist selbstverständlich auch denkbar, dass eine derartige Trocknungseinrichtung mit dem Trocknungsmittel als radial außerhalb des Ringfilterelements angeordneter Trocknungsmittelzylinder ausgebildet ist, wodurch ebenfalls ein selbstständig fester Trocknungsmittelzylinder zur Verfügung steht.

Bei einer weiteren vorteilhaften Ausführungsform der zweiten Alternative des Ringfilterelements ist das Filtermaterial als Faltenstern ausgebildet und die Trocknungseinrichtung mit den Trocknungsmittel ist in zumindest einer nach außen offenen und/oder in zumindest einer nach innen offenen Falte des Faltensterns angeordnet. Auch hierdurch ist es möglich, die Trocknungseinrichtung mit dem Trocknungsmittel im direkten Strömungsweg bzw. im Hauptströmungspfad einer das Ringfilterelement durchströmenden Strömung zu platzieren und dadurch einen hohen Trocknungseffekt zu erzielen.

Zweckmäßig weist das Trocknungsmittel ein Molekularsieb, insbesondere ein natürliches oder synthetisches Zeolith, auf, mit Hilfe dessen Wassermoleküle aus dem Kühlmedium, beispielsweise Öl, adsorbiert werden können. Derartige Molekularsiebe bieten den großen Vorteil, dass diese sowohl kostengünstig als auch regenerierbar sind und insbesondere bei einer lösbar mit dem Ringfilterelement verbundenen Ausführungsform durch ein einfaches Trocknen regenerierbar sind.

Die vorliegende Erfindung beruht weiter auf dem allgemeinen Gedanken, eine Batteriekühleinrichtung mit einer in den vorherigen Absätzen beschriebenen Filtereinrichtung auszustatten und dadurch ein langfristiges Trockenhalten eines dielektrischen Fluides, beispielsweise eines Kühlöls, zuverlässig zu gewährleisten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in der Zeichnung anders dargestellt ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: eine Schnittdarstellung durch eine nicht erfindungsgemäße Filtereinrichtung mit einer in einem Filtergehäusedeckel angeordneten Trocknungseinrichtung,
- Fig. 2: eine Schnittdarstellung durch einen Filtergehäusedeckel mit einem als gesinterten Pressling ausgebildeten Trocknungsmittel,
- Fig. 3: eine Schnittdarstellung durch ein nicht erfindungsgemäßes Ringfilterelement mit einer Trocknungseinrichtung in der oberen und unteren Endscheibe,
- Fig. 4: eine Darstellung wie in Fig. 3, jedoch mit einer Trocknungseinrichtung in einem Innenraum des Ringfilterelements,
- Fig. 5: ein Ringfilterelement mit radial innerhalb und außerhalb eines Filtermaterials angeordnetem Trocknungsmittel,
- Fig. 6: eine Querschnittdarstellung durch ein Ringfilterelement mit in nach außen offenen Falten des Filtermaterials angeordnetem Trocknungsmittel,
- Fig. 7: eine Schnittdarstellung wie in Fig. 1, jedoch bei einem in einem Filtergehäusetopf angeordneten Trocknungsmittel.

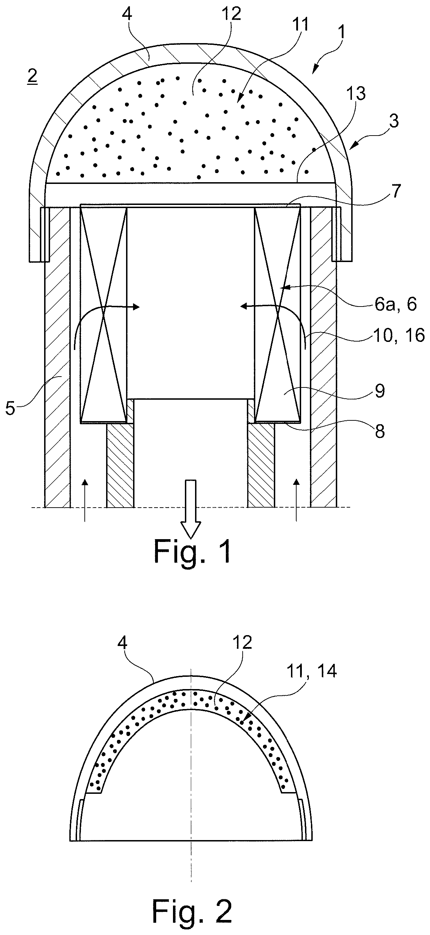

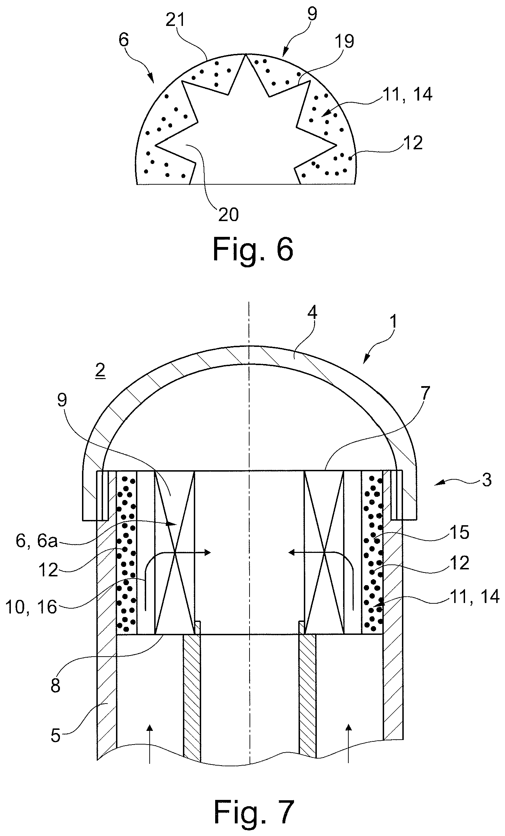

Entsprechend den Fig. 1 und 7, weist eine nicht unter die Erfindung fallende Filtereinrichtung 1, welche beispielsweise als Ölfilter in einer Batteriekühleinrichtung 2 eines Elektrofahrzeuges eingesetzt sein kann, ein Filtergehäuse 3 mit einem Filtergehäusedeckel 4 und einem, damit insbesondere verschraubbaren, Filtergehäusetopf 5 auf. **In** dem Filtergehäuse 3 ist dabei ein Ringfilterelement 6 oder 6a mit einer oberen Endscheibe 7, einer unteren Endscheibe 8 sowie einem zwischen der oberen Endscheibe 7 und der unteren Endscheibe 8 angeordneten Filtermaterial 9 vorgesehen. Das Ringfilterelement 6 ist dabei ein Ringfilterelement mit Trocknungseinrichtung 11 und mit Trocknungsmittel 12, während das Ringfilterelement 6a ein herkömmliches Ringfilterelement ohne Trocknungseinrichtung 11 und ohne Trocknungsmittel 12 ist. Bei einem Einsatz der Filtereinrichtung 1 insbesondere in einer Batteriekühleinrichtung 2 mit einer direkten Kühlung, das heißt mit einem direkten Kontakt zwischen einem Kühlmedium 10, beispielsweise Kühlöl, und einer Elektronik bzw. einer Energiespeicherzelle, ist es erforderlich, das Kühlmedium 10 wasserfrei und damit dielektrisch, das heißt elektrisch nichtleitend, zu halten. Hierfür ist eine Trocknungseinrichtung 11 mit einem Trocknungsmittel 12, insbesondere einem Molekularsieb, das heißt natürlichen und/oder synthetischen Zeolithen, vorgesehen, welches gemäß der Fig. 1 innerhalb des Filtergehäusedeckels 4 angeordnet ist. Hierzu ist im Bereich des Filtergehäusedeckels 4 eine fluiddurchlässige Trennwand 13 vorgesehen, durch welche das Kühlmedium 10 treten und damit das Trocknungsmittel 12 durchströmen kann. Beim Durchströmen ist dabei eine Adsorption von Wassermolekülen durch das Trocknungsmittel 12 und damit ein Trocknen des Kühlmediums 10 möglich. Die Trennwand 13 kann dabei zusammen mit dem Filtergehäusedeckel 4 einen Raum begrenzen, in welchem die Trocknungseinrichtung 11, das heißt konkret das Trocknungsmittel 12, beispielsweise als Schüttgut, angeordnet ist. Die Trennwand 13 ist in dem in Fig. 1 gezeigten Beispiel mit dem Filtergehäusedeckel 4 verbunden, wobei selbstverständlich auch denkbar ist, dass die Trennwand 13 als Gitterkäfig ausgebildet ist und das gesamte Trocknungsmittel 12 einkammert. Durch die Anordnung des Trocknungsmittels 12 im Filtergehäusedeckel 4 kann eine Anordnung in einem vergleichsweise strömungsberuhigten Bereich erreicht werden, wodurch ein durch das Trocknungsmittel 12 verursachter Druckabfall minimiert werden kann.

Die Trocknungseinrichtung 11 mit dem Trocknungsmittel 12 ist erfindungsgemäß als, insbesondere gesinterter, Pressling 14 ausgebildet, dessen Form zumindest teilweise komplementär zur Form des Filtergehäusedeckels 4, das heißt einer Innenkontur desselben ausgebildet und mit diesem verbunden ist. Dabei kann anstelle der in Fig. 2 gezeichneten vollflächigen Anlage der Trocknungseinrichtung 11 an die Innenkontur des Filtergehäusedeckels 4 auch lediglich eine bereichsweise Anlage gewählt werden, wodurch eine größere zur Umströmung bzw. Durchströmung zur Verfügung stehende Oberfläche zum Entfeuchten bzw. Trocknen des Kühlmediums 10 zur Verfügung steht.

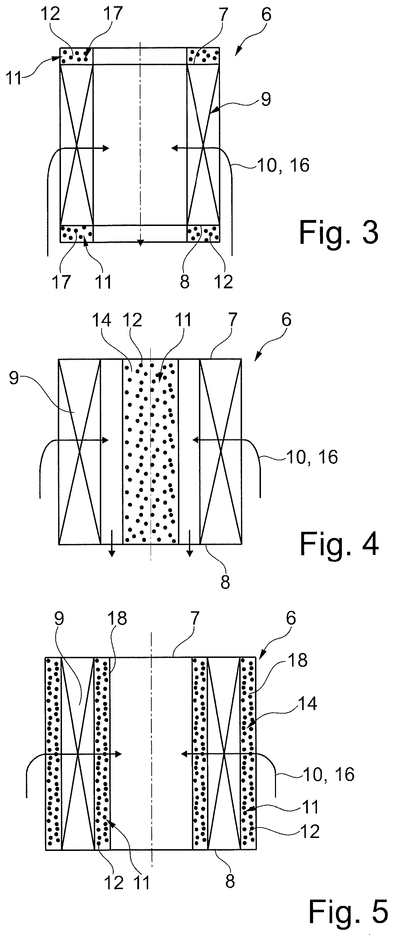

Eine weitere mögliche Ausführungsform einer nicht erfindungsgemäßen Filtereinrichtung 1 ist in Fig. 7 dargestellt, in welcher die Trocknungseinrichtung 11 mit dem Trocknungsmittel 12 als ein das Ringfilterelement 6a umgebender Zylinder 5 ausgebildet ist. In diesem Fall ist die Trocknungseinrichtung 11 seitlich eines Hauptströmungspfades angeordnet, generell gilt dabei, dass die Trocknungseinrichtung 11 nicht zwangsweise in einem Hauptströmungspfad positioniert werden muss, da ein abrupter Wassergehaltsanstieg in dem Kühlmedium 10 üblicherweise nicht zu erwarten ist, sondern eine Anreicherung des Kühlmediums 10 mit Wasser einen stetig langsamen Prozess darstellt. Bei einem höheren gewünschten Trocknungseffekt kann die Anordnung der Trocknungseinrichtung 11 selbstverständlich auch nahe an bzw. in dem Hauptströmungspfad erfolgen. Der Hauptströmungspfad ist dabei in den Fig. 1 und 7 sowie zusätzlich in den Fig. 3 bis 5 mit Strömungspfeilen 16 eingezeichnet.

Betrachtet man die Darstellung entsprechend den Fig. 3 bis 6, so kann man dort ein Ringfilterelement 6 erkennen, welches ebenfalls eine obere Endscheibe 7 sowie eine untere Endscheibe 8 und ein dazwischen angeordnetes Filtermaterial 9 aufweist. Bei dem Ringfilterelement 6 ist dabei an diesem eine Trocknungseinrichtung 11 mit einem Trocknungsmittel 12 vorgesehen.

Gemäß der Fig. 3 ist dabei die Trocknungseinrichtung 11 mit dem Trocknungsmittel 12 an der oberen Endscheibe 7 und an der unteren Endscheibe 8 angeordnet, wobei selbstverständlich auch eine lediglich alternative Anordnung denkbar ist. Die Trocknungseinrichtung 11 mit dem Trocknungsmittel 12 kann dabei als Ringelement 17, insbesondere als Pressling 14, ausgebildet sein und mit der oberen Endscheibe 7 oder der unteren Endscheibe 8 verbunden, insbesondere verschraubt, verclipst oder verklebt, sein. Durch ein Verschrauben bzw. Verclipsen kann insbesondere eine lösbare Befestigung der Trocknungseinrichtung 11 mit der jeweiligen Endscheibe 7, 8 erreicht werden, so dass die Trocknungseinrichtung 11 mit dem Trocknungsmittel 12 turnusmäßig aus der Filtereinrichtung 1 entfernt und durch starkes Erhitzen regeneriert werden kann. Bei einer Verklebung der Trocknungseinrichtung 11 mit der oberen Endscheibe 7 oder der unteren Endscheibe 8 kann die Trocknungseinrichtung 11 bei einem Austausch des Ringfilterelements 6 turnusmäßig mit ausgetauscht werden.

Betrachtet man die Fig. 4, so kann man dort eine Schnittdarstellung durch das Ringfilterelement 6 erkennen, bei welcher die Trocknungseinrichtung 11 mit dem Trocknungsmaterial 12 in einem Innenraum des Ringfilterelements 6, das heißt im vorliegenden Fall auf einer Reinseite, angeordnet ist. Die Trocknungseinrichtung 11 mit dem Trocknungsmaterial 12 kann in diesem Fall stabförmig oder zylinderförmig ausgebildet sein und dadurch lediglich eine Innenfläche des als Faltenstern ausgebildeten Filtermaterials 9 überdecken. Eine derartige Ausführungsform ist beispielsweise in Fig. 5 gezeigt, während in Fig. 4 eine stabförmige Ausführung der Trocknungseinrichtung 11 mit dem Trocknungsmaterial 12 gezeichnet ist.

Entsprechend der Fig. 5 kann zusätzlich oder alternativ zu der innen an dem Filtermaterial 9 gewählten Anordnung des Trocknungsmittels 12 auch eine außenseitige Anordnung des Trocknungsmittels 12 am Filtermaterial 9 gewählt werden, so dass sowohl eine innenseitige als auch eine außenseitige Anordnung und damit ein deutlich gesteigerter Entfeuchtungs- bzw. Trocknungsprozess denkbar ist. In diesem Fall ist die Trocknungseinrichtung 11 mit dem Trocknungsmittel 12 als radial innerhalb und als radial außerhalb des Ringfilterelements 6 bzw. dessen Filtermaterial 9 angeordneter Trocknungsmittelzylinder 18 ausgebildet.

Betrachtet man noch die Fig. 6, so kann man dort eine Ausführungsform des Ringfilterelements 6 erkennen, bei welcher das Filtermaterial 9 als Faltenstern ausgebildet ist und die Trocknungseinrichtung 11 mit dem Trocknungsmittel 12 in den nach außen offenen Falten 19 des Faltensterns angeordnet ist. Dabei ist selbstverständlich klar, dass das Trocknungsmittel 12 nicht in sämtlichen nach außen offenen Falten 19 angeordnet werden muss, sondern lediglich in zumindest einer. Zusätzlich oder alternativ kann das Trocknungsmaterial 12 auch an zumindest einer nach innen offenen Falte 20 angeordnet werden.

Bei der gemäß der Fig. 6 dargestellten Ausführungsform weist die Trocknungseinrichtung 11 noch ein die nach außen offenen Falten 19 überspannendes Gitter 21 auf, welche beispielsweise als loses Schüttgut ausgebildetes Trocknungsmittel 12 an einem Herausfallen hindert. Ein derartiges Gitter wäre selbstverständlich auch an einer Innenkontur des Filtermaterials 9 anzuordnen, sofern die nach innen offenen Falten 20 mit einem derartigen Trocknungsmittel 12 gefüllt wären.

Als Trocknungsmittel 12 kommt insbesondere ein Molekularsieb, beispielsweise natürlicher oder synthetischer Zeolith, in Frage.

Dabei ist selbstverständlich klar, dass in die nicht erfindungsgemäße Filtereinrichtung 1 entsprechend den Fig. 1 und 7 entweder ein herkömmliches Ringfilterelement 6a oder ein Ringfilterelement 6 eingebaut werden kann. Prinzipiell stehen dabei zwei Alternativen zur Auswahl: Bei der ersten Alternative wird ein herkömmliches Ringfilterelement 6a, das heißt ohne Trocknungseinrichtung 11 und ohne Trocknungsmittel 12 im Filtergehäuse 3 eingebaut, wobei im Bereich des Filtergehäuses 3 eine Trocknungseinrichtung 11 mit einem Trocknungsmittel 12 angeordnet wird. Bei der zweiten Alternative wird ein Ringfilterelement 6 mit Trocknungseinrichtung 11 und mit Trocknungsmittel 12 verbaut und das Filtergehäuse 3 weist zusätzlich eine Trocknungseinrichtung 11 mit einem Trocknungsmittel 12 auf.

Mit der erfindungsgemäßen Filtereinrichtung 1 lässt sich ein zuverlässiges Trocknen des Kühlmediums 10 langfristig erreichen.

## Patentansprüche

1. Filtereinrichtung (1), insbesondere ein Ölfilter, mit einem Filtergehäuse (3),
- mit einem darin angeordneten Ringfilterelement (6a) mit einer oberen Endscheibe (7), einer unteren Endscheibe (8) und mit einem zwischen der oberen Endscheibe (7) und der unteren Endscheibe (8) angeordneten Filtermaterial (9), wobei an dem Ringfilterelement (6a) keine Trocknungseinrichtung (11) mit einem Trocknungsmittel (12) vorgesehen ist, oder mit einem darin angeordneten Ringfilterelement (6) mit einer oberen Endscheibe (7), einer unteren Endscheibe (8) und mit einem zwischen der oberen Endscheibe (7) und der unteren Endscheibe (8) angeordneten Filtermaterial (9), wobei an dem Ringfilterelement (6) eine Trocknungseinrichtung (11) mit einem Trocknungsmittel (12) vorgesehen ist,
- mit einer im Bereich des Filtergehäuses (3) angeordneten Trocknungseinrichtung (11) mit einem Trocknungsmittel (12),
- wobei das Filtergehäuse (3) einen Filtergehäusetopf (5) und einen damit, insbesondere verschraubbaren, Filtergehäusedeckel (4) aufweist, wobei die Trocknungseinrichtung (11) mit dem Trocknungsmittel (12) zumindest in einem Teil des Filtergehäusedeckels (4) angeordnet ist,
- wobei das Trocknungsmittel (12) als, insbesondere gesinterter, Pressling (14) ausgebildet ist, dessen Form zumindest teilweise komplementär zur Innenkontur des Filtergehäusedeckels (4) ausgebildet und mit diesem verbunden ist.

2. Filtereinrichtung nach Anspruch 1,
**dadurch gekennzeichnet,**
**dass** die Trocknungseinrichtung (11) mit dem Trocknungsmittel (12) als ein das Ringfilterelement (6, 6a) umgebender Zylinder (15), insbesondere als gesinterter Zeolithzylinder, ausgebildet ist.

3. Filtereinrichtung nach Anspruch 1, zweite Alternative,
**dadurch gekennzeichnet,**
**dass** die Trocknungseinrichtung (11) an der oberen Endscheibe (7) und/oder an der untere Endscheibe (8) angeordnet ist.

4. Filtereinrichtung nach Anspruch 3,
**dadurch gekennzeichnet,**
**dass** die Trocknungseinrichtung (11) mit dem Trocknungsmittel (12) als Ringelement ausgebildet ist.

5. Filtereinrichtung nach Anspruch 4,
**dadurch gekennzeichnet,**
**dass** das Ringelement mit der oberen Endscheibe (7) oder unteren Endscheibe (8) verklebt ist.

6. Filtereinrichtung nach Anspruch 1, zweite Alternative, oder nach einem der Ansprüche 3 bis 5,
**dadurch gekennzeichnet,**
**dass** die Trocknungseinrichtung (11) mit dem Trocknungsmittel (12) an dem Filtermaterial (9) angeordnet ist.

7. Filtereinrichtung nach Anspruch 6,
**dadurch gekennzeichnet,**
**dass** die Trocknungseinrichtung (11) mit dem Trocknungsmittel (12) als radial innerhalb oder außerhalb des Ringfilterelements (6) angeordneter Trocknungsmittelzylinder (18) ausgebildet ist.

8. Filtereinrichtung nach Anspruch 1, zweite Alternative, oder nach einem der Ansprüche 3 bis 7,
**dadurch gekennzeichnet,**
**dass** das Filtermaterial (9) als Faltenstern ausgebildet ist und die Trocknungseinrichtung (11) mit dem Trocknungsmittel (12) in zumindest einer nach außen offenen Falte (19) und/oder in zumindest einer nach innen offenen Falte (20) des Faltensterns angeordnet ist.

9. Filtereinrichtung nach Anspruch 1, zweite Alternative, oder nach einem der Ansprüche 3 bis 8,
**dadurch gekennzeichnet,**
**dass** das Trocknungsmittel (12) ein Molekularsieb, insbesondere Zeolith, aufweist.

10. Batteriekühleinrichtung (2) mit einer Filtereinrichtung (1) nach einem der Ansprüche 1 bis 9.

## Claims

1. Filter device (1), in particular an oil filter, having a filter housing (3),
- having a ring filter element (6a) which is arranged therein and has an upper end plate (7), a lower end plate (8) and a filter material (9) arranged between the upper end plate (7) and the lower end plate (8), wherein no drying device (11) having a drying agent (12) is provided on the ring filter element (6a), or having a ring filter element (6) which is arranged therein and has an upper end plate (7), a lower end plate (8) and a filter material (9) arranged between the upper end plate (7) and the lower end plate (8), wherein a drying device (11) having a drying agent (12) is provided on the ring filter element (6),
- having a drying device (11) which is arranged in the region of the filter housing (3) and has a drying agent (12),
- wherein the filter housing (3) comprises a filter housing pot (5) and a filter housing lid (4) which can in particular be screwed to said pot, wherein the drying device (11) having the drying agent (12) is arranged at least in a part of the filter housing lid (4),
- wherein the drying agent (12) is formed as an, in particular sintered, pellet (14) of which the shape is at least partially complementary to the inner contour of the filter housing lid (4) and is connected to said lid.

2. Filter device according to claim 1,
**characterized in that**
the drying device (11) having the drying agent (12) is designed as a cylinder (15) surrounding the ring filter element (6, 6a), in particular as a sintered zeolite cylinder.

3. Filter device according to claim 1, second alternative,
**characterized in that**
the drying device (11) is arranged on the upper end plate (7) and/or on the lower end plate (8).

4. Filter device according to claim 3,
**characterized in that**
the drying device (11) having the drying agent (12) is designed as a ring element.

5. Filter device according to claim 4,
**characterized in that**
the ring element is bonded to the upper end plate (7) or the lower end plate (8).

6. Filter device according to claim 1, second alternative, or according to any of claims 3 to 5,
**characterized in that**
the drying device (11) having the drying agent (12) is arranged on the filter material (9).

7. Filter device according to claim 6,
**characterized in that**
the drying device (11) having the drying agent (12) is designed as a drying agent cylinder (18) which is arranged radially inside or outside the ring filter element (6).

8. Filter device according to claim 1, second alternative, or according to any of claims 3 to 7,
**characterized in that**
the filter material (9) is designed as a pleated star and the drying device (11) having the drying agent (12) is arranged in at least one outwardly open pleat (19) and/or in at least one inwardly open pleat (20) of the pleated star.

9. Filter device according to claim 1, second alternative, or according to any of claims 3 to 8,
**characterized in that**
the drying agent (12) comprises a molecular sieve, in particular zeolite.

10. Battery cooling device (2) comprising a filter device (1) according to any of claims 1 to 9.

## Revendications

1. Dispositif de filtration (1), en particulier filtre à huile, comportant un boîtier de filtre (3),
- comportant un élément filtrant annulaire (6a) disposé dans celui-ci et comportant une plaque d'extrémité supérieure (7), une plaque d'extrémité inférieure (8) et comportant un matériau filtrant (9) disposé entre la plaque d'extrémité supérieure (7) et la plaque d'extrémité inférieure (8), dans lequel aucun dispositif de séchage (11) comportant un moyen de séchage (12) n'est prévu sur l'élément filtrant annulaire (6a), ou comportant un élément filtrant annulaire (6) disposé dans celui-ci et comportant une plaque d'extrémité supérieure (7), une plaque d'extrémité inférieure (8) et comportant un matériau filtrant (9) disposé entre la plaque d'extrémité supérieure (7) et la plaque d'extrémité inférieure (8), dans lequel un dispositif de séchage (11) comportant un moyen de séchage (12) est prévu sur l'élément filtrant annulaire (6),
- comportant un dispositif de séchage (11) comportant un moyen de séchage (12) disposé dans la zone du boîtier de filtre (3),
- dans lequel le boîtier de filtre (3) présente un pot de boîtier de filtre (5) et un couvercle de boîtier de filtre (4) pouvant en particulier être vissé avec celui-ci, dans lequel le dispositif de séchage (11) comportant le moyen de séchage (12) est disposé au moins dans une partie du couvercle de boîtier de filtre (4),
- dans lequel le moyen de séchage (12) est réalisé en tant que pièce pressée (14), en particulier frittée, dont la forme est au moins partiellement complémentaire du contour intérieur du couvercle de boîtier de filtre (4) et est reliée à celui-ci.

2. Dispositif de filtration selon la revendication 1,
**caractérisé en ce que**
le dispositif de séchage (11) comportant le moyen de séchage (12) est réalisé comme un cylindre (15) entourant l'élément filtrant annulaire (6, 6a), en particulier comme un cylindre à zéolithe fritté.

3. Dispositif de filtration selon la revendication 1, seconde alternative,
**caractérisé en ce que**
le dispositif de séchage (11) est disposé sur la plaque d'extrémité supérieure (7) et/ou sur la plaque d'extrémité inférieure (8).

4. Dispositif de filtration selon la revendication 3,
**caractérisé en ce que**
le dispositif de séchage (11) comportant le moyen de séchage (12) est réalisé sous forme d'élément annulaire.

5. Dispositif de filtration selon la revendication 4,
**caractérisé en ce que**
l'élément annulaire est collé à la plaque d'extrémité supérieure (7) ou à la plaque d'extrémité inférieure (8).

6. Dispositif de filtration selon la revendication 1, seconde alternative, ou selon l'une des revendications 3 à 5,
**caractérisé en ce que**
le dispositif de séchage (11) comportant le moyen de séchage (12) est disposé sur le matériau filtrant (9).

7. Dispositif de filtration selon la revendication 6,
**caractérisé en ce que**
le dispositif de séchage (11) comportant le moyen de séchage (12) est réalisé comme un cylindre à moyen de séchage (18) disposé radialement à l'intérieur ou à l'extérieur de l'élément filtrant annulaire (6).

8. Dispositif de filtration selon la revendication 1, seconde alternative, ou selon l'une des revendications 3 à 7,
**caractérisé en ce que**
le matériau filtrant (9) est réalisé sous forme d'étoile à plis et le dispositif de séchage (11) comportant le moyen de séchage (12) est disposé dans au moins un pli ouvert vers l'extérieur (19) et/ou dans au moins un pli ouvert vers l'intérieur (20) de l'étoile à plis.

9. Dispositif de filtration selon la revendication 1, seconde alternative, ou selon l'une des revendications 3 à 8,
**caractérisé en ce que**
le moyen de séchage (12) présente un tamis moléculaire, en particulier de la zéolithe.

10. Dispositif de refroidissement de batterie (2) comportant un dispositif de filtration (1) selon l'une des revendications 1 à 9.
